# EUROPEAN PATENT APPLICATION

(11) **EP 4 067 859 A1**
(43) Date of publication of application: **05.10.2022**
(21) Application number: 20893578.3
(22) Date of filing: 24.11.2020
(51) Int. Cl.: G01N 1/28

(54) **TISSUE TREATMENT DEVICE**

(30) Priority: 26.11.2019 CN 201922063022 U
(71) Applicant: Leica Biosystems Nussloch GmbH, 69226 Nussloch (DE)
(72) Inventor: JIN, Chun, Shanghai 201206 (CN)
(74) Representative: DehnsGermany Partnerschaft von Patentanwälten
(86) International application number: PCT/CN2020/131122
(87) International publication number: WO 2021/104258

(57) **Abstract**

A tissue treatment device, the tissue treatment device comprising: boxes, the boxes being used for carrying tissue; box containers, the boxes being received in the box containers; a workbench, the box containers being movably disposed on the upper side of the workbench; and elastic containers, the elastic containers being disposed on the lower side of the workbench, wherein the workbench defines through holes, the box containers are communicated with the elastic containers by means of the through holes, and each elastic container is configured to extrude a reagent contained therein into the box container when the elastic containers is deformed and to suck the reagent from the box container into the elastic container when the elastic containeris restored. When the elastic container is deformed, the reagent contained in the elastic container is extruded into the box container so that the tissue is immersed by the reagent, and when the elastic container is restored, the reagent contained in the box container is sucked into the elastic container to release the tissue from the reagent, so as to achieve the treatment of single tissue by means of a unique solution to prevent cross-contamination.

## Description

### FIELD

The present disclosure relates to a field of tissue processing technologies, and more particularly to a tissue treatment device.

### BACKGROUND

The tissue treatment device is used to immerse a tissue in a reagent, to facilitate subsequent processing of the tissue. In the related art, the tissue treatment device cannot provide pressure or vacuum for the tissue processing, and has limitation when handling multi-reagent processing protocol with only one dispensing nozzle.

### SUMMARY

The present disclosure is aimed to solve at least one above problems to at least some extent.

To this end, the present disclosure provides a tissue treatment device, which is a one-piece-flow tissue treatment device, can avoid cross contamination by processing single tissues using unique protocols, and can provide pressure, vacuum and heating functions for the tissue processing to improve the quality of the tissue.

The tissue treatment device according to embodiments of the present disclosure includes a cassette configured to carry a tissue; a cassette container, the cassette being received in the cassette container; a working stage having an upper side and a lower side arranged oppositely, the cassette container being movably arranged to the upper side of the working stage; and an elastic vessel arranged to the lower side of the working stage. The working stage defines a through hole, the cassette container is communicable with the elastic vessel via the through hole, and the elastic vessel is configured to squeeze reagent contained in the elastic vessel into the cassette container when the elastic vessel is deformed, and to suck the reagent in the cassette container into the elastic vessel when the elastic vessel restores.

In the tissue treatment device according to embodiments of the present disclosure, by providing the through hole in the working stage, the cassette container arranged to the upper side of the working stage is communicated with the elastic vessel arranged to the lower side of the working stage; when the elastic vessel deforms, the reagent contained in the elastic vessel is squeezed into the cassette container such that the tissue is immersed in the reagent; and when the elastic vessel restores, the reagent contained in the cassette container is sucked into the elastic vessel such that the tissue is released from the reagent, to realize that single tissues can be processed by unique protocols to avoid cross contamination.

Additionally, the tissue treatment device according to embodiments of the present disclosure may have the following additional features.

In at least one embodiment according to the present disclosure, a top of the cassette container has an opening, and the reagent is filled into the elastic vessel and the cassette container via the opening.

In at least one embodiment according to the present disclosure, the tissue treatment device further includes a container cover detachably mounted to the cassette container to seal the opening such that the container cover, the cassette container and the elastic vessel can define a sealed chamber.

In at least one embodiment according to the present disclosure, the tissue treatment device further includes a suction device or a pressurization device, the suction device or the pressurization device is operatively arranged above the cassette container, and configured to operatively suck gas in the sealed chamber or fill the gas into the sealed chamber, to create vacuum or pressure within the sealed chamber. Thus, the tissue can be immersed in the reagent more fully, and the quality of the tissue can be improved.

In at least one embodiment according to the present disclosure, the tissue treatment device further includes a dispensing nozzle operatively arranged above the cassette container and configured to fill the reagent into the cassette container and the elastic vessel. Thus, motorization of the filling of the reagent is realized.

In at least one embodiment according to the present disclosure, the suction device or the pressurization device is integrated with the dispensing nozzle. Thus, the structure of the tissue treatment device can be simplified.

In at least one embodiment according to the present disclosure, the container cover is fixedly connected to the dispensing nozzle. Thus, it can be realized that the container cover is detachably mounted to the cassette container by handling the dispensing nozzle.

In at least one embodiment according to the present disclosure, the tissue treatment device further includes a discharge nozzle operatively arranged above the cassette container and configured to be capable of extending into the elastic vessel and sucking the reagent in the cassette container into the elastic vessel. Thus, the reagent in the cassette container can be fully discharged from the cassette container.

In at least one embodiment according to the present disclosure, the tissue treatment device further includes an ejector rod arranged below the elastic vessel, and the ejector rod is configured to operatively press or release the elastic vessel, to deform or restore the elastic vessel. Thus, the tissue can be immersed in the reagent or released from the reagent.

In at least one embodiment according to the present disclosure, the ejector rod is provided with a heating device, such that heat generated by the heating device can be transferred to the elastic vessel through the ejector rod. Thus, the temperature maintenance of the reagent is facilitated, and the quality of the tissue is improved.

In at least one embodiment according to the present disclosure, the tissue treatment device further includes a conveying device, the cassette container is fixedly mounted to the conveying device, and the conveying device is configured to drive the cassette container to move relative to the working stage. Thus, the cassette container can move relative to the working stage, to facilitate subsequent processing of the tissue.

In at least one embodiment according to the present disclosure, the conveying device includes two conveying belts arranged parallelly, the two conveying belts define at least a pair of mounting grooves arranged oppositely, the cassette container forms a pair of mounting lugs arranged oppositely, and the pair of mounting lugs is adapted to fit in the at least a pair of mounting grooves. Thus, the cassette container is fixedly mounted to the two conveying belts, and can move with movement of the conveying belts.

Additional aspects and advantages of embodiments of present invention will be given in part in the following descriptions, become apparent in part from the following descriptions, or be learned from the practice of the embodiments of the present invention.

### BRIEF DESCRIPTION OF THE DRAWINGS

Other features and advantages of the present disclosure refer to the following description, which explain the present disclosure in detail in combination with the accompanying drawings and based on the implementations.
FIG. 1 is a perspective view of a tissue treatment device according to an embodiment of the present disclosure;
FIG. 2 is a partial side view of a tissue treatment device according to an embodiment of the present disclosure; and
FIG. 3 is a partial perspective view of a tissue treatment device according to an embodiment of the present disclosure.

### DETAILED DESCRIPTION

The characteristics and advantages of preferred embodiments of the present disclosure will be described below with reference to the accompany drawings. The same or similar reference numerals are used to indicate same or similar members or members with same or similar functions throughout the description. The embodiments described herein with reference to drawings are explanatory, illustrative, and used to generally understand the present disclosure. The embodiments shall not be construed to limit the present disclosure.

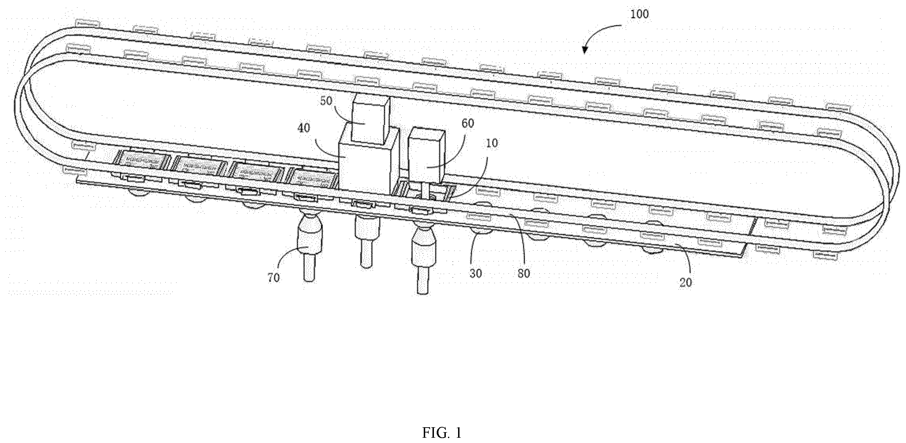

A tissue treatment device 100 according to embodiments of the present disclosure will be described below with reference to FIGS. 1 to 3.

As illustrated in FIGS. 1 to 3, the tissue treatment device 100 according to embodiments of the present disclosure includes a cassette configured to carry a tissue; a cassette container 10, the cassette being received in the cassette container 10; a working stage 20 having an upper side and a lower side arranged oppositely, the cassette container 10 being movably arranged to the upper side of the working stage 20; and an elastic vessel 30 arranged to the lower side of the working stage 20. The working stage 20 defines a through hole 22, the cassette container 10 can be communicated with the elastic vessel 30 via the through hole 22, and the elastic vessel 30 is configured to squeeze reagent contained in the elastic vessel 30 into the cassette container 10 when the elastic vessel 30 is deformed, and to suck the reagent in the cassette container 10 into the elastic vessel 30 when the elastic vessel 30 restores.

In the tissue treatment device 100 according to embodiments of the present disclosure, by providing the through hole 22 in the working stage 20, the cassette container 10 arranged to the upper side of the working stage 20 is communicated with the elastic vessel 30 arranged to the lower side of the working stage 20; when the elastic vessel 30 deforms, the reagent contained in the elastic vessel 30 is squeezed into the cassette container 10 such that the tissue is immersed in the reagent; and when the elastic vessel 30 restores, the reagent contained in the cassette container 10 is sucked into the elastic vessel 30 such that the tissue is released from the reagent, to realize that single tissues can be processed by unique protocols to avoid cross contamination.

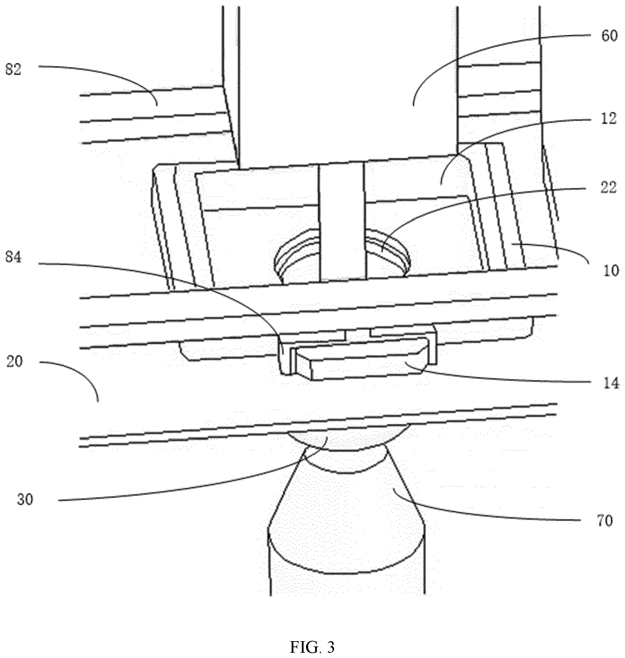

In some examples, as illustrated in FIG. 3, the cassette container 10 defines an aperture at a lower portion, and the aperture of the cassette container 10 can be aligned with the through hole 22 of the working stage 20. Thus, the elastic vessel 10 can be communicated with the cassette container 10 via the through hole 22 of the working stage 20 and the aperture of the cassette container 10.

In some embodiments, as illustrated in FIG. 3, a top of the cassette container 10 has an opening 12, and the reagent is filled into the elastic vessel 30 and the cassette container 10 via the opening 12.

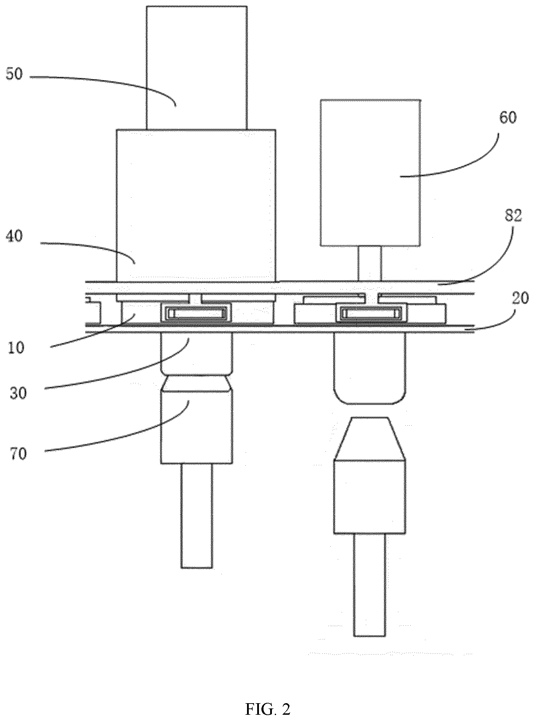

In some embodiments, as illustrated in FIG. 2, the tissue treatment device 100 further includes a container cover 40, the container cover 40 is detachably mounted to the cassette container 10 to seal the opening 12, such that the cassette container 10, the elastic vessel 30 and the container cover 40 may define a sealed chamber. Thus, the tissue processing can be performed in a sealed environment, facilitating improvement of the quality of the tissue.

In some embodiments, as illustrated in FIG. 2, the tissue treatment device 100 further includes a suction device or a pressurization device, the suction device or the pressurization device is operatively arranged above the cassette container 10, and configured to operatively suck gas in the sealed chamber or fill the gas into the sealed chamber, to create vacuum or pressure within the sealed chamber. Thus, the tissue can be immersed in the reagent more fully, and the quality of the tissue can be improved.

It could be understood that the suction device or the pressurization device being operatively arranged above the cassette container 10 refers to that the suction device or the pressurization device may be moved to above the cassette container 10 or may be removed from above the cassette container 10. In some examples, the suction device or the pressurization device is movable above the cassette container 10 in an up-and-down direction, that is, moving closer to or away from the cassette container 10 in the up-and-down direction.

In some embodiments, as illustrated in FIGS. 1 and 2, as illustrated in FIGS. 1 and 2, the tissue treatment device 100 further includes a dispensing nozzle 50, the dispensing nozzle 50 is operatively arranged above the cassette container 10 and configured to fill the reagent into the cassette container 10 and the elastic vessel 30. Thus, motorization of the filling of the reagent is realized, to reduce the labor intensity of an operator.

It could be understood that the dispensing nozzle 50 being arranged above the cassette container 10 refers to that the dispensing nozzle 50 may be moved to above the cassette container 10 or may be removed from above the cassette container 10. In some examples, the dispensing nozzle 50 is movable above the cassette container 10 in the up-and-down direction, that is, moving closer to or away from the cassette container 10 in the up-and-down direction.

In some embodiments, as illustrated in FIG. 2, the suction device or the pressurization device is integrated with the dispensing nozzle 50. Thus, the structure of the tissue treatment device 100 can be simplified. For example, a gas pump may be selectively connected to the dispensing nozzle 50, such that the gas is sucked from the sealed chamber or filled into the sealed chamber through the dispensing nozzle 50, to create vacuum or pressure within the sealed chamber.

In some embodiments, as illustrated in FIG. 2, the container cover 40 is fixedly connected to the dispensing nozzle 50. Thus, it can be realized that the container cover 40 is detachably mounted to the cassette container 10 by handling the dispensing nozzle 50.

It could be understood that the dispensing nozzle 50 moves in the up-and-down direction to be closer to or away from the cassette container 10, thus, the container cover 40 fixedly connected to the dispensing nozzle 50 can seal or release the opening 12 of the cassette container 10.

It could be further understood that a tip of the dispensing nozzle 50 extends towards the cassette container 10 and passes through the container cover 40, thus the dispensing nozzle 50 may selectively fill the reagent into the cassette container 10 and the elastic vessel 30, or selectively create pressure or vacuum within the sealed chamber, to facilitate improvement of the quality of the tissue.

In some embodiments, as illustrated in FIGS. 2 and 3, the tissue treatment device 100 further includes a discharge nozzle 60, the discharge nozzle 60 is operatively arranged above the cassette container 10 and configured to be capable of extending into the elastic vessel 30 and sucking the reagent in the cassette container 10 into the elastic vessel 30. Thus, the reagent in the cassette container 10 can be fully discharged from the cassette container 10.

It could be understood that the discharge nozzle 60 being arranged above the cassette container 10 refers to that the discharge nozzle 60 may be moved to above the cassette container 10 or may be removed from above the cassette container 10. In some examples, the discharge nozzle 60 is movable above the cassette container 10 in the up-and-down direction, that is, moving closer to or away from the cassette container 10 in the up-and-down direction.

In some embodiments, as illustrated in FIGS. 1 to 3, the tissue treatment device 100 further includes an ejector rod 70, the ejector rod 70 is operatively arranged below the elastic vessel 30, and the ejector rod 70 is configured to operatively press or release the elastic vessel 30 to deform or restore the elastic vessel 30. Thus, the tissue can be immersed in the reagent or released from the reagent.

It could be understood that the ejector rod 70 being arranged above the cassette container 10 refers to that the ejector rod 70 may be moved to below the cassette container 10 or may be removed from below the cassette container 10. In some examples, the ejector rod 70 is movable below the cassette container 10 in the up-and-down direction, that is, moving closer to or away from the cassette container 10 in the up-and-down direction.

In some embodiments, as illustrated in FIGS. 1 to 3, the ejector rod 70 may be provided with a heating device, such that heat generated by the heating device can be transferred to the elastic vessel 30 through the ejector rod 70. Thus, the temperature maintenance of the reagent is facilitated, and the quality of the tissue is improved. In some examples, the heating device may be arranged in the ejector rod 70, to simplify the structure of the tissue treatment device 100.

In some embodiments, as illustrated in FIG. 1, the tissue treatment device 100 further includes a conveying device 80, the cassette container 10 is fixedly mounted to the conveying device 80, and the conveying device 80 is configured to drive the cassette container 10 to move relative to the working stage 20. Thus, the cassette container 10 can move relative to the working stage 20, to facilitate subsequent processing of the tissue.

In some embodiments, as illustrated in FIGS. 2 and 3, the conveying device 80 includes two conveying belts 82 arranged parallelly, the two conveying belts 82 define at least a pair of mounting grooves 84 arranged oppositely, the cassette container 10 forms a pair of mounting lugs 14 arranged oppositely, and the pair of mounting lugs 14 is adapted to fit in the at least a pair of mounting grooves 84. Thus, the cassette container 10 is fixedly mounted to the two conveying belts 82, and can move with movement of the conveying belts 82.

In some embodiments, the working stage 20 may be provided with a first work position and a second work position, the first work position is provided with the through hole 22 and the elastic vessel 30, the dispensing nozzle 50 is arranged above the first work position, and the ejector rod 70 is arranged below the first work position; the second work position is provided with the through hole 22 and the elastic vessel 30, and the discharge nozzle 60 is arranged above the second work position.

A work process of the tissue treatment device 100 according to embodiments of the present disclosure will be described with reference to FIGS. 1 to 3.

The cassette container 10 is conveyed to the first work position by the conveying belts 82 of the conveying device 80, the aperture of the cassette container 10 is aligned with the through hole 22 of the working stage 20 at the first work position, and thus the elastic vessel 30 of the working stage 20 at the first work position is communicated with the cassette container 10. The dispensing nozzle 50 fill the reagent into the cassette container 10 and the elastic vessel 30. The ejector rod 70 rises up, to immerse the tissue in the reagent. The dispensing nozzle 50 is moved to move the container cover 40 to the cassette container 10 to seal the cassette container 10, and the gas pump is operated to create vacuum and pressure within the sealed chamber defined by the cassette container 10, the elastic vessel 30 and the container cover 40 through the dispensing nozzle 50, to allow immersion of the tissue and improvement of the quality of the tissue. The ejector rod 70 moves downwards, and the reagent is sucked into the elastic vessel 30. The cassette container 10 is conveyed to the second work position by the conveying belts 82 of the conveying device 80, and the discharge nozzle 60 extends into the elastic vessel 30 to fully discharge the reagent of the cassette container 10. Thus, the tissue can be conveyed to a next processing step by the conveying belts 82 of the conveying device 80.

Thus, the tissue treatment device according to embodiments of the present disclosure is a one-piece-flow tissue treatment device, can avoid cross contamination by processing single tissues using unique protocols, and can provide pressure, vacuum and heating functions for the tissue processing to improve the quality of the tissue; furthermore, it is to track and integrated with a previous processing step or a next processing step.

In addition, terms such as "first" and "second" are used herein for purposes of description and are not intended to indicate or imply relative importance or significance. Thus, features limited by "first" and "second" are intended to indicate or imply including one or more than one these features. In the description of the present disclosure, "a plurality of' means two or more than two, unless specified otherwise.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements. the above terms can be understood by those skilled in the art according to specific situations.

In the present disclosure, unless specified or limited otherwise, a structure in which a first feature is "on" or "below" a second feature may include an embodiment in which the first feature is in direct contact with the second feature, and may also include an embodiment in which the first feature and the second feature are not in direct contact with each other, but are contacted via an additional feature formed therebetween. Furthermore, a first feature "on," "above," or "on top of' a second feature may include an embodiment in which the first feature is right or obliquely "on," "above," or "on top of' the second feature, or just means that the first feature is at a height higher than that of the second feature. While a first feature "below," "under," or "on bottom of' a second feature may include an embodiment in which the first feature is right or obliquely "below," "under," or "on bottom of' the second feature, or just means that the first feature is at a height lower than that of the second feature.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. Thus, the appearances of the phrases in various places throughout this specification are not necessarily referring to the same embodiment or example of the present disclosure. Furthermore, the particular features, structures, materials, or characteristics may be combined in any suitable manner in one or more embodiments or examples. In addition, various embodiments or examples described in the present specification may be combined by those skilled in the art.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A tissue treatment device, comprising:
a cassette configured to carry a tissue;
a cassette container, the cassette being received in the cassette container;
a working stage having an upper side and a lower side arranged oppositely, the cassette container being movably arranged to the upper side of the working stage; and
an elastic vessel arranged to the lower side of the working stage,
wherein the working stage defines a through hole, the cassette container is communicable with the elastic vessel via the through hole, and the elastic vessel is configured to squeeze reagent contained in the elastic vessel into the cassette container when the elastic vessel is deformed, and to suck the reagent in the cassette container into the elastic vessel when the elastic vessel restores.

2. The tissue treatment device according to claim 1, wherein a top of the cassette container has an opening, and the reagent is filled into the elastic vessel and the cassette container via the opening.

3. The tissue treatment device according to claim 2, wherein the tissue treatment device further comprises a container cover detachably mounted to the cassette container to seal the opening such that the container cover, the cassette container and the elastic vessel define a sealed chamber.

4. The tissue treatment device according to claim 3, wherein the tissue treatment device further comprises a suction device or a pressurization device, the suction device or the pressurization device is operatively arranged above the cassette container, and configured to operatively suck gas in the sealed chamber or fill the gas into the sealed chamber, to create vacuum or pressure within the sealed chamber.

5. The tissue treatment device according to claim 4, wherein the tissue treatment device further comprises a dispensing nozzle operatively arranged above the cassette container and configured to fill the reagent into the cassette container and the elastic vessel.

6. The tissue treatment device according to claim 5, wherein the suction device or the pressurization device is integrated with the dispensing nozzle.

7. The tissue treatment device according to claim 5 or 6, wherein the container cover is fixedly connected to the dispensing nozzle.

8. The tissue treatment device according to any one of claims 2 to 6, wherein the tissue treatment device further comprises a discharge nozzle operatively arranged above the cassette container and configured to be capable of extending into the elastic vessel and sucking the reagent in the cassette container into the elastic vessel.

9. The tissue treatment device according to any one of claims 1 to 6, wherein the tissue treatment device further comprises an ejector rod arranged below the elastic vessel, and the ejector rod is configured to operatively press or release the elastic vessel, to deform or restore the elastic vessel.

10. The tissue treatment device according to claim 9, wherein the ejector rod is provided with a heating device, such that heat generated by the heating device can be transferred to the elastic vessel through the ejector rod.

11. The tissue treatment device according to any one of claims 1 to 6, wherein the tissue treatment device further comprises a conveying device, the cassette container is fixedly mounted to the conveying device, and the conveying device is configured to drive the cassette container to move relative to the working stage.

12. The tissue treatment device according to claim 11, wherein the conveying device comprises two conveying belts arranged parallelly, the two conveying belts define at least a pair of mounting grooves arranged oppositely, the cassette container forms a pair of mounting lugs arranged oppositely, and the pair of mounting lugs arranged oppositely is adapted to fit in the at least a pair of mounting grooves arranged oppositely.
